# EUROPEAN PATENT SPECIFICATION

(11) **EP 4 158 118 B1**
(45) Date of publication and mention of the grant of the patent: **26.02.2025**
(21) Application number: 21730305.6
(22) Date of filing: 28.05.2021
(51) Int. Cl.: E03F 5/10, G06Q 50/06, E03F 5/12, E03F 7/00

(54) **COMBINED SEWER OVERFLOW SENSOR SYSTEM AND METHODS**
KOMBINIERTES ABWASSERKANALÜBERLAUFSENSORSYSTEM UND VERFAHREN
SYSTÈME ET MÉTHODES DE DETECTION DE TROP-PLEIN D'ÉGOUT COMBINÉS

(30) Priority: 01.06.2020 SE 2050623
(43) Date of publication of application: 05.04.2023
(73) Proprietor: Aqua Robur Technologies AB, 412 50 Göteborg (SE)
(72) Inventor: HOLM, Martin, 41285 Göteborg (SE); OHM, Alexander, 42470 Olofstorp (SE)
(74) Representative: Henricson Briggs, David James
(86) International application number: PCT/SE2021/050500
(87) International publication number: WO 2021/246935

(56) References cited:
- WO-A1-2018/009976
- FR-A1- 2 922 625
- US-A1- 2007 103 324
- US-A1- 2018 013 941

## Description

### Field of the Invention

The present disclosure relates to combined sewer overflow detection systems, and methods for operating combined sewer overflow detection systems.

### Background of the invention

A combined sewer system is a sewage collection system which combines waste water (sewage) and storm water (rain water) to direct the combined water, generally, to a waste water treatment plant.

A waste water treatment plant generally has a capacity limitation on the volume of water which may be captured for treatment. During for example heavy rain the volume of storm water in the combined system may be relatively high compared to the normal volume of water flowing in the system. If the volume of water flowing in the combined sewer exceeds the capacity of the waste water treatment plant the combined water may be output by a combined sewer overflow (CSO). Often the combined water may flow from the overflow to a water source such as a river, lake or into the sea. The overflow is generally a trough or aperture in a pipe, the aperture being arranged above the general water level in the pipe, if the water exceeds the level of the overflow it flows via the trough/aperture.

The monitoring of such overflow events is important for municipal water services as an overflow may lead to untreated waste water entering a water source in the environment, leading to pollution etc. Monitoring may be a regulatory or legal requirement on a municipal water service. Traditionally the monitoring of such overflow events occurs via estimation based on precipitation levels.

Some overflow sensor systems are known in the art. Previously float based sensor systems, or hydrostatic pressure sensors may be used to measure an overflow event. However, these are generally installed for a period of time, compared to known precipitation records and then estimation is subsequently used to determine if a combined sewer overflow event has occurred. This is because the systems generally consume substantial amounts of energy and it may be costly and difficult to maintain such sensors as they are in contact with inherently dirty water, both existing sensor systems have a capacity to attract debris and thus lead to incorrect and misleading information. Additionally, sensor systems generally require external power sources or have a short lifespan due to necessarily high power consumption over long durations arising from constant monitoring and transmission of water levels. Detailed monitoring with battery powered systems has previously not been possible due to the energy requirements of the sensor and communication systems.

US 2007/0103324 A1 relates to a monitoring system including a monitoring device for sewers. The monitoring device is placed in manhole covers and communicates with a remote monitoring station.

Improved sensing systems are necessary to ensure that combined sewer overflow events are monitored.

### Summary of the invention

Accordingly, the present invention preferably seeks to mitigate, alleviate or eliminate one or more of the above-identified deficiencies in the art and disadvantages singly or in any combination and solves at least the above mentioned problems by providing a system as defined in claim 1.

A method in a combined sewer detection system is also provided, as defined in claim 7.

Further advantageous embodiments are disclosed in the appended and dependent patent claims.

### Brief description of the drawings

These and other aspects, features and advantages of which the invention is capable will be apparent and elucidated from the following description of embodiments of the present invention, reference being made to the accompanying drawings, in which
Fig. 1a is a schematic blog diagram of a system for detecting an overflow event in a combined sewer according to an aspect.
Fig. 1b is a blog diagram of the aspect of the system shown in the region of the dotted square in figure 1a.
Fig. 2a is schematic representation of the height in a combined sewer over a period of time, the system events according to an aspect are shown.
Fig. 2b is schematic representation of the height in a combined sewer over a second period of time, the system events according to an aspect are shown.
Fig. 2c is schematic representation of the height in a combined sewer over a third period of time, the system events according to an aspect are shown.
Fig. 3 is a flow chart describing operation of the system according to an aspect.
Fig. 4 is a flow chart describing operation of the system in an overflow detection and transmission mode according to an aspect.

### Detailed description

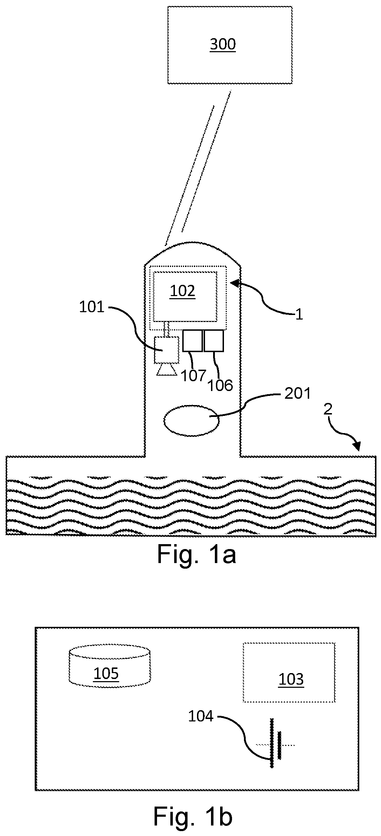

Figure 1 shows a combined sewer overflow system 1 for monitoring overflow events in a combined sewer 2. The system 1 comprises a first sensor 101 for measuring the level of water in a combined sewer 2. The sensor 101 is a non-contact sensor and is positioned at a height above the overflow outlet 201 of the combined sewer. The sensor 101 is connected to a controller 102 which receives an output from the sensor 101, the output representing the height of water in the combined sewer 2. The controller 102 is provided with a transmission module 103 for transmitting received sensor data to a data collection system 300. The system 1 further comprises an on-board power source 104 for providing power to the controller 102 and the sensor 101.

During operation the controller 102 is adapted to control the operation of the sensor 101. The controller 102 is adapted to enable and disable the sensor periodically to detect the level of water in the combined sewer 2. The controller 102 is generally initially in a coarse detection mode. When the controller 102 is in a coarse detection mode the interval i.e., period of time between enabling the sensor 101 to detect the height of water in the combined sewer 2 is *t(detection)_{coarse}.* If the controller 102 receives data from the sensor 101 indicating that the height of water in the combined sewer 2 is above a predetermined threshold then the controller is adapted to enter an overflow mode.

In an overflow mode the system is in an enhanced operation mode. In an overflow mode the system 1 may be adapted such that the period between enabling the sensor 101 to detect the height of water in the combined sewer is *t(detection)_{overflow}. t(detection)_{overflow}* is shorter than *t(detection)_{coarse}.*

When the controller 102 is in the coarse detection mode it uses minimal power. When the controller 102 is in an overflow mode it uses substantially more power than in the coarse detection mode. The different detecting periods, different transmission periods, and/or different sensor activation, depending on the level of water in the system enable the system 1 to consume substantially less energy than existing systems which, for example, sample at the same rate, and therein increases the lifespan and reduces maintenance costs for the system 1.

The increase in lifespan is especially relevant in a combined sewer 2 as accessing the combined sewer 2 may be difficult, time consuming and costly. For example, the combined sewer 2 may be underground and only accessible to authorised personal. The less maintenance the system 1 requires substantially increases the ease of use of the system for a municipality/user.

The controller 102 is adapted to transmit sensor data via the transmission module 103. The controller 102 transmits sensor data to the data collection system 300. The sensor data sent from the controller 102 is received at the data collection system 300. The controller 102 is adapted to adjust the duration between sending events based on the level of water detected in the combined sewer system 2.

In the coarse transmission mode the controller 102 may transmit data at an interval of *t(transmission)_{coarse}.* In the overflow transmission mode the controller 102 transmits data at an interval of *t(transmission)_{overflow}. t(transmission)_{coarse}* is substantially greater than *t(transmission)_{overflow}.* That is, in an overflow mode the system 1, and in particular the controller 102, detects and transmits data at an increased rate compared to in the coarse mode, when the system 1 has detected that there is no overflow event occurring. The transmission of data is power intensive and therefore by sending data at a different rate/interval depending on the water level in the combined sewer 2 the system 1 saves power and increases maintenance intervals.

In an overflow mode, the overflow transmission mode, and the overflow detection mode may be advantageously combined. That is, the system 1 detects at an increased rate, and transmits data at an increased rate compared to in a coarse detection/transmission mode.

The system 1 may comprise additional sensors 106, 107 adapted to measure water or environmental parameters in the combined sewer 2, the parameter being distinct from the height of the water. For example, the system 1 may comprise a temperature sensor 106 to measure the temperature of the water in the combined sewer 2, and/or the ambient temperature in the combined sewer 2. The system may comprise a flow rate sensor 107 to measure the flow rate of water in the combined sewer 2. The flow rate sensor may be a contact or non-contact flow rate sensor. Each of the additional sensors, or a combination of sensors, may be activated on entering the overflow mode.

On entering the overflow mode, the system 1 may activate at least one additional sensor 106, 107. The sensor, on activation, detects a parameter of the water distinct from the height of the water in the combined sewer 2, the sensor data detected may thereafter be transmitted via the controller 102. The transmission may occur at an interval of *t(transmission)_{coarse} of t(detection)_{overflow}* depending on whether the system 1 is transmitting in an overflow or coarse transmission mode.

In an overflow mode, the system 1 may each of: detect at a rate of t *t(detection)_{overflow}*; activate an additional sensor 106,107 to detect a parameter of the water distinct from the water height; transmit detected height sensor data, and/or the sensor data from the additional sensor at a rate of *t(transmission)_{overflow}.* In an overflow mode the system 1 may advantageously combine several, or all the above. For example, the height of water in the combined sewer 2 may be detected at a rate of *t(detection)_{overflow},* the at least one additional sensor 106, 107 may be activated, and the sensor data may be transmitted at a rate of *t(transmission)_{overflow}.*

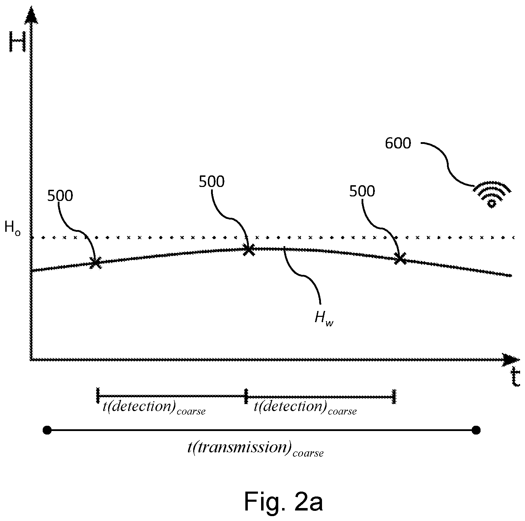

Figures 2a-c show the water level *H_{w}* during three separate time twenty-four hour periods. Figures 2a-c also show sensing events and transmission events during the three separate time periods depending on the level of water in the combined sewer system 2.

In Figure 2a the water level *H_{w}* is maintained below the predetermined threshold height Hₒ. Each sensing event 500 is marked with a cross. Each sensing event indicates that the controller 102 is woken from a sleep mode, detects the height of water in the combined sewer 2, and stores the detected height in a storage module 105 on the controller. Each transmission event 600, is marked with an arrow. During each transmission event 600 the controller may be woken from a sleep mode, and sends data via the transmission module 103. As can be seen in figure 2a the controller 102 transmits data once during a twenty-four hour period, i.e., *t(transmission)_{coarse}* = 24 hours. As the controller 102 detects that the height of water in the combined sewer overflow does not exceed in the threshold Hₒ, it is maintained in a coarse detection mode throughout the twenty-four hour period of figure 2a.

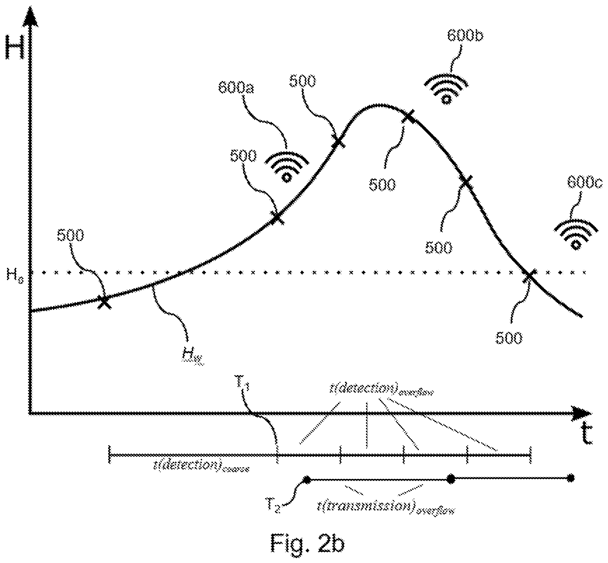

Figure 2b shows the water level during another twenty-four hour period. In figure 2b the water level exceeds the predetermined threshold height Hₒ. Each sensing event 500 is marked with a cross. Each sensing event 500 indicates that the controller 102 is woken from a sleep mode, detects the height of water in the combined sewer 2, and stores the detected height in a storage module 105 on the controller. Each transmission event 600, is marked with an arrow. During each transmission event 600a-c the controller may be woken from a sleep mode, and sends data via the transmission module 103. As can be seen the controller 102 detects that the height has exceeded the threshold at time Ti. The height of water exceeding the threshold may be designated an overflow event. Once the controller 102 has detected that the height of the water in the combined sewer overflow has exceeded the threshold Hₒ the controller 102 enters the overflow mode. In the overflow mode the controller 102 detects the height of water in the combined sewer 2 more frequently than in the coarse detection mode. That is, it detects once every period, *t(detection)_{overflow}.* The controller 102 is also adapted to transmit the detected height via the transmission module 103 more frequently than in the coarse detection mode. In figure 2b a first transmission event 600a occurs at T₂. The first transmission event 600a may occur before any further sensing events. At the transmission events 600a-c the controller 102 transmits the stored data corresponding to the height of the water in the combined sewer 2. In the transmission event 600a the transmitted data may comprise height data corresponding to the period when the water height was below the threshold level Hₒ and when the water height was above the threshold level Hₒ. A second transmission event 600b occurs after a period of *t(transmission)_{overflow}.* At the second transmission event 600b the controller 102 transmits stored data corresponding to the height of the water in the combined sewer 2 stored since the previous transmission event 600a. At the first sensing event after the height of water in the combined sewer 2 drops below the threshold Hₒ this drop is detected by the sensor 101 and controller 102. The controller 102 may thereafter return to the coarse measurement mode and detect the height once every period *t(detection)_{coarse}.* After the intervening transmission period of *t(transmission)_{overflow},* the controller 102 transmits via the transmission module 103 the stored data corresponding to the height in the combined sewer 2. The controller 102 then returns to the coarse transmission mode. A subsequent transmission 600c may occur after *t(transmission)_{coarse}* which in figure 2b is at the completion of the twenty-four hour period. The subsequent transmission 600c comprises the stored data corresponding to the height of water in the combined sewer 2 when the water was above and below the threshold Hₒ.

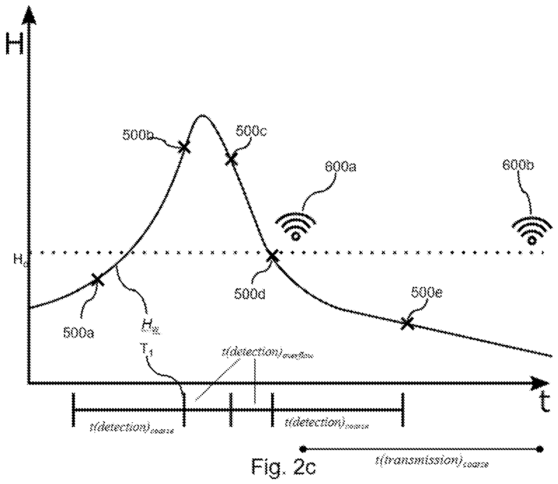

Figure 2c shows the water level in a combined sewer 2 during a third twenty-four hour period. In the period shown in figure 2c the water level increases above the threshold Hₒ for a short duration. The short overflow duration in figure 2c is less than the period *t(transmission)_{overflow}.* Each sensing event 500 indicates that the controller 102 is woken from a sleep mode, detects the height of water in the combined sewer 2, and stores the detected height in a storage module 105 on the controller. Each transmission event 600, is marked with an arrow. During each transmission event 600 the controller may be woken from a sleep mode, and sends data via the transmission module 103. As can be seen the controller 102 detects that the height has exceeded the threshold at time Ti. The height of water exceeding the threshold may be called an overflow event. Once the controller 102 has detected that the height of the water in the combined sewer overflow has exceeded the threshold Hₒ the controller 102 enters the overflow mode. In the overflow mode the controller 102 detects the height of water in the combined sewer 2 more frequently than in the coarse detection mode. That is, it detects once every period, *t(detection)_{overflow}.* The controller 102 is also adapted to transmit the detected height via the transmission module 103 more frequently than in the coarse detection mode. In figure 2b a first transmission event 600a occurs after Ti. At the transmission events 600a-b the controller 102 transmits the stored data corresponding to the height of the water in the combined sewer 2. In the transmission event 600a the transmitted data may comprise height data corresponding to the period when the water height was below the threshold level Hₒ and when the water height was above the threshold level Hₒ. The controller 102, detects via the sensor 101 that the height of water in the combined sewer is below the threshold at sensing event 500d. In figure 2c 500d is shown to correspond to when the water level drops below the threshold Hₒ. However, as each detection event occurs at a predetermined rate, after the specified interval, there may be a delay corresponding to some portion of the interval *t(detection)_{overflow}* before this detection occurs. The controller 102 may thereafter transmit the stored data corresponding to the height of the water in the combined sewer 2. As the water level has dropped below the threshold Hₒ the controller enters the coarse detection and transmission mode and the subsequent transmission event 600b occurs after the interval *t(transmission)_{coarse}.*

As can be noted in the above descriptions the transmission interval, and the sensing interval is dependent on the level of water in the combined sewer 2. Via altering the sensing and transmission intervals based on the height of water in the combined sewer a reduced total energy consumption during overflow and non-overflow periods is achieved. The system 1 therein has lower energy consumption needs compared to a system which transmits are regular intervals regardless of the level of water in the combined sewer 2. Clearly this is especially important for a system which has on-board energy storage and provision, e.g., battery power. This enables the system 1 to be installed in a combined sewer 2 and left, substantially maintenance free for periods of up to several years. For example, the system may be left without requiring replacement of a battery for up to 10 years.

It may be noted that generally the system 1 will be in the course measurement, and course transmission modes, as generally there is no overflow via the combined sewer outlet 201. In most combined sewer 2 installations the combined sewer will not overflow unless relatively high precipitation occurs. Therefore, in a normal state, the system 1 consumes minimal power.

The sensor 101 may be any non-contact sensor for detecting the level of a fluid, for example an acoustic sensor, such as an ultrasonic sensor; a radar such as a pulsed coherent radar (PCR), and/or a laser sensor. An ultrasonic sensor is suitable due to its low power consumption and effectiveness in measuring the distance from the sensor 101 to the top of the fluid in the combined sewer 2. A pulsed coherent radar (PCR) is an especially suitable sensor due to its low power consumption and that the radar signal is generally not affected by ambient light or noise. Furthermore, a PCR-type sensor may be fully encapsulated meaning it is mechanically protected from the ambient conditions in the sewer.

The sensor 101 is positioned at a height above the overflow outlet of the combined sewer 2. Once in position in the combined sewer 2 the sensor 101 may be calibrated such that the predetermined threshold Hₒ is established for the particular installation.

The threshold Hₒ is implemented as a range and not a single distinct value, depending on the previous detected level. For example, Hₒ is a first height if the previous detected heights have been below the threshold Hₒ, however, if the system is in an overflow mode, then Hₒ is adjusted to a second height such that it is less than the first height. Via this technique the system is less likely to oscillate between coarse detection and overflow modes.

The controller 102 is preferably implemented by any commercially available MCU ("Micro Controller Unit"), MPU ("Micro Processor Unit"), CPU ("Central Processing Unit"), DSP ("Digital Signal Processor") or any other electronic programmable logic device. The controller 102 is configured to read instructions from memory and execute these instructions to control the operation of the system 1. The memory may be implemented using any commonly known technology for computer-readable memories such as ROM, RAM, SRAM, DRAM, CMOS, FLASH, DDR, SDRAM or some other memory technology. The memory is used for various purposes by the controller 102, one of them being for storing application data and program instructions for various software modules in the controller 102. The software modules include a real-time operating system.

The transmission module 103 may be a radio frequency interface adapted to communicate via a low-power long-range radio technology such as LPWAN including, for example, LoRa, SigFox; NB-IoT, and/or LTE-M. The transmission module 103 may be adapted to communicate via e.g., GSM, W-CDMA/HSPA, UTRAN, long-range 5G or the like, however, these higher-power communication technologies are less suitable as they increase power consumption and therefore reduce battery life and the duration between maintenance periods. The transmission module 103 may be adapted to communicate with a second transmission module 103 in the vicinity of the first via a mesh-network. One of the first or second transmission modules 103 may thereafter transmit the sensor data to the data collection system 300. Such a mesh-network arrangement may enable reduced energy consumption as each system 1 need not send sensor data over the long-range network.

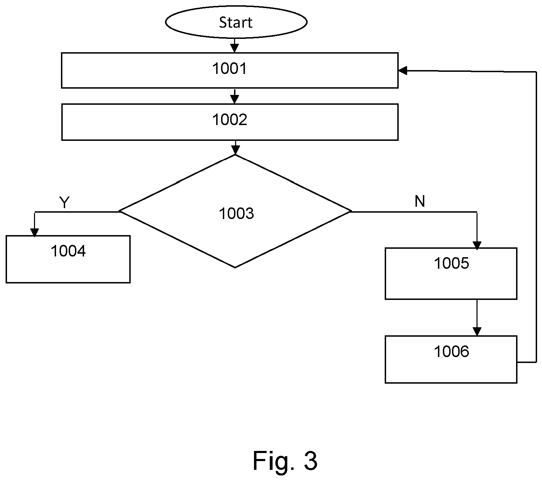

Figure 3 shows a flowchart describing an overflow monitoring and transmission process performed with the system 1. The system 1 below is described as starting in the coarse detection mode and the coarse transmission mode.

Action 1001: the controller 102 wakes and enables the sensor 101 to detect the level of water in the combined sewer 2.

Action 1002: the controller 102 receives sensor data from the sensor 101 corresponding to the height of water in the combined sewer 2. The value is stored in the storage module 105.

Action 1003: the controller 102 compares the received sensor data to the predetermined threshold Hₒ. The controller 102 determines if the height of the water in the combined sewer 2 is greater than the threshold Hₒ. If the height of water is above the threshold height the system 1 proceeds to Action 1004. If the height of water is below the threshold Hₒ then the system proceeds to Action 1005.

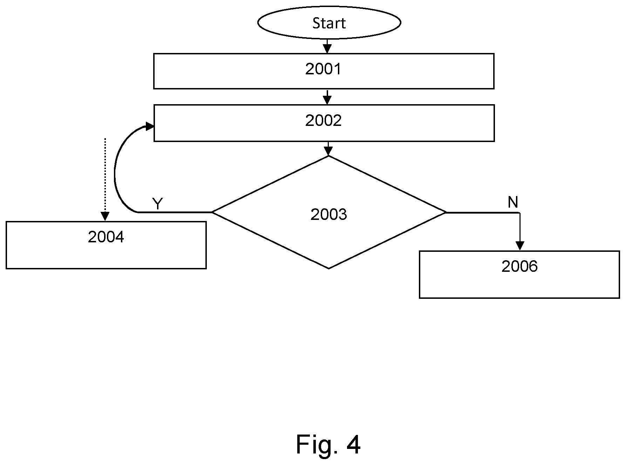

Action 1004: the system 1 enters the overflow mode. A flowchart representing the process performed by the system 1 during an overflow event, i.e., when the system is in overflow mode is shown in figure 4.

Action 1005: the controller 102 determines if transmission of data is due. Transmission occurs in the interval *t(transmission)_{coarse}.* If transmission is due then the controller 102 actives the transmission module 103 and transmits the data representing the measured height of water for the period *t(transmission)_{coarse}.*

Action 1006: the system sleeps for a period of *t(detection)_{coarse}* .

As noted, figure 4 shows a flowchart representing the process performed by the system during an overflow event, i.e., when the system is in an overflow mode.

Action 2001: the controller 102 activates the transmission module 103 and transmits the data representing the measured height of water.

Action 2002: the controller 102 wakes and enables the sensor 101 to detect the level of water in the combined sewer 2,

Action 2003: the controller 102 receives sensor data from the sensor 101 corresponding to the height of water in the combined sewer 2. The value is stored in the storage module 105.

The controller 102 continues to detect the level of water in the combined sewer 2 and receive the data at an interval of *t(detection)_{overflow}.* The controller 102 compares the received sensor data to the predetermined threshold Hₒ. The controller 102 determines if the height of the water in the combined sewer 2 is greater than the threshold Hₒ. If the height of water is above the threshold height the system 1 is maintained in the overflow mode. If the height of water is below the threshold Hₒ then the system proceeds to returns to the coarse detection mode, numbered Action 2006.

Action 2004: in parallel with the detection of water levels i.e., not necessarily subsequent to Action 2003, the controller 102 actives the transmission module 103 every interval *t(transmission)_{overflow}* for transmission of the detected water levels for the period *t(transmission)_{overflow}.*

Furthermore, the controller 102, may activate an additional sensor 106, 107 for detecting a water parameter distinct from the height of the water. The sensor data from the additional sensor 106, 107 may be transmitted by the transmission module as described above.

The transmission and detection intervals above have been described in general terms. Typical values for *t(detection)_{coarse}* may be from 5 minutes to 1 hour, such as 5 mins to 30 mins, whilst typical values of *t(detection)_{overflow}* may be from 30 seconds to 15 mins, such as from 1 min to 5 mins. Typical values of *t(transmission)_{coarse}* may be from 8 hours to 24 hours. Typical values of *t(transmission)_{overflow}* may be from 1 min to 1 hour, for example, 5 mins to 30 mins. Furthermore, in some instances, in the coarse detection and/or coarse transmission modes the detection/transmission of data may occur at a scheduled time rather than after a given interval. For example, transmission of data may occur at midnight or noon etc, rather than after a set interval when no overflow event has been detected.

The sensor data may enable improved estimation of the volume of water which overflows via the overflow outlet of the combined sewer 2. Previous systems using for example, a float sensor which floats on or under the surface of the water in a combined sewer would indicate the start of an overflow event, when the water level is above the predetermined threshold, and the end of an overflow event, when the water level is below the predetermined threshold. The volume of water which flows via the outlet could then be determined via the duration of the overflow event. The present system 1 enables the measurement of the height of water during the overflow event.

The sensor data is encrypted prior to transmission via the transmission module 103. The sensor data is encrypted via the controller 102. The sensor data represents the height of the water in the combined sewer but may not necessarily be a value in meters. As would be understood to a skilled person the sensor data may be raw sensor values corresponding to a height, but which are first converted to a height in e.g., metres after being received at the data collection system 300. With an acoustic sensor as described herein the measured sensor data is for example, generally represents a distance of the measured fluid from the sensor 101. The sensor 101 is installed in a combined sewer 2 at a known height with respect to the overflow outlet 201, the distance from the sensor 101 corresponds to a height of water in the combined sewer 2.

Furthermore, the threshold Hₒ may correspond to the height of the overflow outlet, or it may correspond to a height slightly below the overflow outlet, such that the controller enters the overflow detection and/or transmission modes when the water reaches a level in the vicinity of the overflow outlet 201 of the combined sewer 2. The threshold Hₒ need not correspond exactly to the height of the opening of the overflow outlet 201.

As described above, the system 1 may be located in a combined sewer 2. For example, the controller 102, the sensor 101, the transmission module 103, the on-board power source 104, and the storage module 105 may be located in a combined sewer 2. The transmission module 103 may therefore able to transmit data through the walls, coverings etc. of the combined sewer 2.

Some embodiments may be represented as a non-transitory software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to one or more of the described embodiments. The skilled person appreciates that other instructions and operations necessary to implement the described embodiments may also be stored on the machine-readable medium. Software running from the machine -readable medium may interface with circuitry, i.e., in the controller to perform the described tasks.

Although, the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A system (1) for detecting an overflow event in a combined sewer (2) comprising:
- a sensor (101) for detecting the level of water in the combined sewer (2), the sensor (101) being a non-contact level sensor positioned at a height above an overflow outlet (201) of the combined sewer (2),
- a controller (102) adapted to receive sensor data from the sensor (101),
- a transmission module (103) adapted to transmit sensor data to a data collection system (300),
- an on-board power source (104) for providing power to the sensor (101), the controller (102) and the transmission module (103); and,
wherein the system (1) is configured to operate in two modes, a coarse detection and transmission mode, and an overflow detection and transmission mode; and, wherein, in the coarse detection mode the system (1) is configured to detect the level of water in the combined sewer (2) at an interval of *t(detection)_{coarse},* and, wherein the system is configured to operate in a coarse transmission mode wherein in the coarse transmission mode sensor data representing the level of water in the combined sewer (2) is transmitted at an interval of *t(transmission)_{coarse},* and, wherein, in the overflow detection and transmission mode the system (1) is configured to:
(i) detect the level of water in the combined sewer (2) at an interval of *t(detection)_{overflow},* wherein *t(detection)_{overflow}* is less than *t(detection)_{coarse},* and,
(ii) operate in an overflow transmission mode wherein data representing the level of water in the combined sewer (2) is transmitted at an interval of *t(transmission)_{overflow},* wherein *t(transmission)_{overflow}* is less than *t(transmission)_{coarse}*;
and, wherein the system (1) is adapted to enter the overflow detection and transmission mode if the level of the water in the combined sewer (2) exceeds a predetermined threshold Hₒ, corresponding to a first level, and wherein when the system is in the overflow detection and transmission mode, the system is adapted to enter the coarse detection and transmission mode if the level of the water in the combined sewer (2) below falls below a threshold corresponding to a second level, which is less than the first level.

2. The system (1) according to claim 1, wherein in the overflow detection and transmission mode the system is further adapted to activate at least one additional sensor (106, 107) to detect an environmental or water parameter distinct from the level of the water in the combined sewer (2).

3. The system (1) according to claims 1 or 2, wherein the transmission module (103) is configured to transmit sensor data wirelessly to the data collection system (300).

4. The system (1) according to any of claims 1 to 3, wherein the on-board power source (104) is a battery.

5. The system according to any of claim 2 to 4, wherein the at least one additional sensor (106, 107) is a temperature sensor adapted to measure the temperature of the water, and/or the ambient temperature in the combined sewer (2), or a flow-rate sensor adapted to measure the flow-rate of the water.

6. The system according to any of claims 1 to 5, wherein the non-contact level sensor (101) is a pulsed coherent radar, PCR, sensor.

7. A method in a combined sewer overflow detection system (1), the system comprising a non-contact level sensor (101) positioned at a height above an overflow outlet (201) of a combined sewer (2), the method comprising:
- detecting the water level in the combined sewer (2) at an interval of *t(detection)_{coarse},*
- transmitting sensor data from the non-contact level sensor (101) at a first interval of *t(transmission)_{coarse},* and
- determining if the water level exceeds a threshold water level Hₒ, corresponding to a first level and if the water level exceeds the threshold Hₒ, entering an overflow detection and transmission mode, the overflow detection and transmission mode comprising performing:
- detecting the water level at an interval of *t(detection)_{overflow}* wherein, *t(detection)_{overflow}* is less than *t(detection)_{coarse}*; and,
- transmitting sensor data from the non-contact level sensor (101), at a transmission interval of *t(transmission)_{overflow},* wherein *t(transmission)_{overflow}* is less than *t(transmission)_{coarse},*
- and, when the system is in the overflow detection and transmission mode,
- determining if the water level is below a threshold corresponding to a second level, which is less than the first level, and if the water level is below the threshold corresponding to the second level:
- detecting the water level at the interval of *t(detection)_{coarse},* and
- transmitting sensor data from the non-contact level sensor (101) at the interval of *t(transmission)_{coarse}.*

8. The method in a combined sewer overflow detection system (1) according to claim 7, wherein the method comprises:
- activating an additional sensor (106, 107) to detect an environmental and/or water parameter distinct from the level of the water in the combined sewer (2).

9. The method in a combined sewer overflow detection system (1) according to any of claims 7 or 8, comprising:
- if the water level is below the threshold corresponding to a second level,
- transmitting the sensor data from the non-contact level sensor (101), and/or the additional sensor (106, 107) detected during the previous interval *t(transmission)_{overflow},* and subsequently, transmitting the sensor data at an interval of *t(transmission)_{coarse}.*

10. The method in a combined sewer overflow detection system (1) according to any of claims 7 to 9, wherein the non-contact level sensor is a pulsed coherent radar, PCR, sensor (101).

## Patentansprüche

1. System (1) zum Erfassen eines Entlastungsereignisses in einem Mischwasserkanal (2), umfassend:
- einen Sensor (101) zum Erfassen des Wasserstands in dem Mischwasserkanal (2), wobei der Sensor (101) ein berührungsloser Füllstandssensor ist, der in einer Höhe über einem Entlastungsauslass (201) des Mischwasserkanals (2) positioniert ist,
- eine Steuereinrichtung (102), die angepasst ist, um Sensordaten von dem Sensor (101) zu empfangen,
- ein Übertragungsmodul (103), das angepasst ist, um Sensordaten an ein Datengewinnungssystem (300) zu übertragen,
- eine integrierte Stromquelle (104) für eine Stromversorgung des Sensors (101), der Steuereinrichtung (102) und des Übertragungsmoduls (103); und,
wobei das System (1) konfiguriert ist, um in zwei Modi, einem Groberfassungs- und Grobübertragungsmodus und einem Entlastungserfassungs- und Entlastungsübertragungsmodus, zu arbeiten; und wobei das System (1) in dem Groberfassungsmodus konfiguriert ist, um den Wasserstand in dem Mischwasserkanal (2) in einem Intervall von *t(Erfassung)_{grob}* zu erfassen, und wobei das System konfiguriert ist, um in einem Grobübertragungsmodus zu arbeiten, wobei in dem Grobübertragungsmodus Sensordaten, die den Wasserstand in dem Mischwasserkanal (2) darstellen, in einem Intervall von *t(Übertragung)_{grob}* übertragen, und wobei das System (1) in dem Entlastungserfassungs- und Entlastungsübertragungsmodus konfiguriert ist zum:
(i) Erfassen des Wasserstands in dem Mischwasserkanal (2) in einem Intervall von *t(Erfassung)_{Entlastung},* wobei *t(Erfassung)_{Entiastung}* kleiner als *t(Erfassung)_{grob}* ist; und,
(ii) Arbeiten in einem Entlastungsübertragungsmodus, wobei Daten, die den Wasserstand in dem Mischwasserkanal (2) darstellen, in einem Intervall von *t(Übertragung)_{Entlastung}* übertragen werden, wobei *t(Übertragung)_{Entlastung}* kleiner als *t(Überlragung)_{grob}* ist,
und wobei das System (1) angepasst ist, um in den Entlastungserfassungs- und Entlastungsübertragungsmodus einzutreten, falls der Wasserstand in dem Mischwasserkanal (2) einen vorbestimmten Schwellenwert Hₒ überschreitet, entsprechend einem ersten Stand, und wobei, wenn das System sich in dem Entlastungserfassungs- und Entlastungsübertragungsmodus befindet, das System angepasst ist, um in den Groberfassungs- und Grobübertragungsmodus einzutreten, falls der Wasserstand in dem darunter liegenden Mischwasserkanal (2) unter einen Schwellenwert fällt, entsprechend einem zweiten Stand, der niedriger als der erste Stand ist.

2. System (1) nach Anspruch 1, wobei das System in dem Entlastungserfassungs- und Entlastungsübertragungsmodus ferner angepasst ist, um mindestens einen zusätzlichen Sensor (106, 107) zu aktivieren, um einen Umwelt- oder Wasserparameter zu erfassen, der sich von dem Wasserstand in dem Mischwasserkanal (2) unterscheidet.

3. System (1) nach Anspruch 1 oder 2, wobei das Übertragungsmodul (103) konfiguriert ist, um Sensordaten an das Datengewinnungssystem (300) drahtlos zu übertragen.

4. System (1) nach einem der Ansprüche 1 bis 3, wobei die integrierte Stromquelle (104) eine Batterie ist.

5. System nach einem der Ansprüche 2 bis 4, wobei der mindestens eine zusätzliche Sensor (106, 107) ein Temperatursensor ist, der angepasst ist, um die Temperatur des Wassers und/oder die Umgebungstemperatur in dem Mischwasserkanal (2) zu messen, oder ein Durchflusssensor ist, der angepasst ist, um die Durchflussrate des Wassers zu messen.

6. System nach einem der Ansprüche 1 bis 5, wobei der berührungslose Füllstandssensor (101) ein kohärenter Pulsradarsensor, PCR-Sensor, ist.

7. Verfahren in einem Erfassungssystem (1) für Mischwasserkanalentlastung, wobei das System einen berührungslosen Füllstandssensor (101) umfasst, der in einer Höhe über einem Entlastungsauslass (201) eines Mischwasserkanals (2) positioniert ist, wobei das Verfahren umfasst:
- Erfassen des Wasserstands in dem Mischwasserkanal (2) in einem Intervall von *t(Erfassung)_{grob},*
- Übertragen von Sensordaten von dem berührungslosen Füllstandssensor (101) in einem ersten Intervall von *t(Überlragung)_{grob}* und
- Bestimmen, ob der Wasserstand einen Schwellenwasserstand Hₒ überschreitet, entsprechend einem ersten Stand, und falls der Wasserstand den Schwellenwert Hₒ überschreitet, Eintreten in einen Entlastungserfassungs- und Entlastungsübertragungsmodus, wobei der Entlastungserfassungs- und Entlastungsübertragungsmodus das Durchführen umfasst von:
- Erfassen des Wasserstands in einem Intervall von *t(Erfassung)_{Entlastung},* wobei *t(Erfassung)_{Entlastung}* kleiner als *t(Erfassung)_{grob}* ist; und,
- Übertragen von Sensordaten von dem berührungslosen Füllstandssensor (101) in einem Übertragungsintervall von *t(Übertragung)_{Entiastung},* wobei *t(Übertragung)_{Entiastung}* kleiner als *t(Übertragung)_{grob}* ist,
- und wenn das System sich in dem Entlastungserfassungs- und Entlastungsübertragungsmodus befindet,
- Bestimmen, ob der Wasserstand unter einem Schwellenwert liegt, entsprechend einem zweiten Stand, der niedriger als der erste Stand ist, und falls der Wasserstand unter dem Schwellenwert liegt, entsprechend dem zweiten Stand:
- Erfassen des Wasserstands in dem Intervall von *t(Erfassung)_{grob},* und
- Übertragen von Sensordaten von dem berührungslosen Füllstandssensor (101) in dem Intervall von *t(Übertragung)_{grob}.*

8. Verfahren in einem Erfassungssystem (1) für Mischwasserkanalentlastung nach Anspruch 7, wobei das Verfahren umfasst:
- Aktivieren eines zusätzlichen Sensors (106, 107), um einen Umwelt- und/oder Wasserparameter zu erfassen, der sich von dem Wasserstand in dem Mischwasserkanal (2) unterscheidet.

9. Verfahren in einem Erfassungssystem (1) für Mischwasserkanalentlastung nach einem der Ansprüche 7 oder 8, umfassend:
- falls der Wasserstand unter dem Schwellenwert liegt, entsprechend einem zweiten Stand,
- Übertragen der Sensordaten von dem berührungslosen Füllstandssensor (101) und/oder dem zusätzlichen Sensor (106, 107), die während des vorherigen Intervalls *t(Übertragung)_{Entlastung}* erfasst wurden, und anschließendes Übertragen der Sensordaten in einem Intervall von *t(Übertragung)_{grob}.*

10. Verfahren in einem Erfassungssystem (1) für Mischwasserkanalentlastung nach einem der Ansprüche 7 bis 9, wobei der berührungslose Füllstandssensor ein kohärenter Pulsradarsensor, PCR-Sensor, (101) ist.

## Revendications

1. Système (1) de détection d'un événement de trop-plein dans un égout unitaire (2) comprenant :
- un capteur (101) pour détecter le niveau d'eau dans l'égout unitaire (2), le capteur (101) étant un capteur de niveau sans contact positionné à une hauteur au-dessus d'une sortie de trop-plein (201) de l'égout combiné (2),
- un dispositif de commande (102) adapté pour recevoir les données de capteur à partir du capteur (101),
- un module de transmission (103) adapté pour transmettre les données de capteur à un système de collecte de données (300),
- une source d'énergie embarquée (104) pour alimenter le capteur (101), le dispositif de commande (102) et le module de transmission (103) ; et,
dans lequel le système (1) est configuré pour fonctionner selon deux modes, un mode de détection et de transmission grossière et un mode de détection et de transmission de trop-plein ; et, dans lequel, dans le mode de détection grossière, le système (1) est configuré pour détecter le niveau d'eau dans l'égout unitaire (2) à un intervalle de *t(détection)_{grossière},* et, dans lequel le système est configuré pour fonctionner dans un mode de transmission grossière, dans lequel, dans le mode de transmission grossière, les données de capteur représentant le niveau d'eau dans l'égout unitaire (2) sont transmises à un intervalle de *t(transmission)_{grossière},* et, dans lequel, dans le mode de détection et de transmission de trop-plein, le système (1) est configuré pour :
(i) détecter le niveau d'eau dans l'égout unitaire (2) à un intervalle de *t(détection)ₜᵣₒₚ₋ₚₗₑᵢₙ,* dans lequel *t(détection)ₜᵣₒₚ₋ₚₗₑᵢₙ* est inférieur à *t(détection)_{grossière}* ; et,
(ii) fonctionner en mode de transmission de trop-plein, dans lequel les données représentant le niveau d'eau dans l'égout unitaire (2) sont transmises à un intervalle de *t(transmission) ₜᵣₒₚ₋ₚₗₑᵢₙ,* dans lequel *t(transmission)ₜᵣₒₚ₋ₚₗₑᵢₙ* est inférieure à *t(transmission)_{grossière}* ;
et, dans lequel le système (1) est adapté pour entrer dans le mode de détection et de transmission de trop-plein si le niveau de l'eau dans l'égout unitaire (2) dépasse un seuil prédéterminé Hₒ, correspondant à un premier niveau, et dans lequel, lorsque le système est dans le mode de détection et de transmission de trop-plein, le système est adapté pour entrer dans le mode de détection et de transmission grossière si le niveau d'eau dans l'égout unitaire (2) tombe en dessous d'un seuil correspondant à un second niveau, qui est inférieur au premier niveau.

2. Système (1) selon la revendication 1, dans lequel, en mode de détection et de transmission de trop-plein, le système est en outre adapté pour activer au moins un capteur supplémentaire (106, 107) afin de détecter un paramètre environnemental ou hydrique distinct du niveau d'eau dans l'égout unitaire (2).

3. Système (1) selon l'une quelconque des revendications 1 ou 2, dans lequel le module de transmission (103) est configuré pour transmettre sans fil les données du capteur au système de collecte de données (300).

4. Système (1) selon l'une quelconque des revendications 1 à 3, dans lequel la source d'énergie embarquée (104) est une batterie.

5. Système selon l'une quelconque des revendications 2 à 4, dans lequel au moins un capteur supplémentaire (106, 107) est un capteur de température adapté pour mesurer la température de l'eau et/ou la température ambiante dans l'égout unitaire (2), ou un capteur de débit adapté pour mesurer le débit d'écoulement de l'eau.

6. Système selon l'une quelconque des revendications 1 à 5, dans lequel le capteur de niveau sans contact (101) est un capteur de radar cohérent à impulsions (PCR).

7. Procédé dans un système de détection de trop-plein d'égout unitaire (1), le système comprenant un capteur de niveau sans contact (101) positionné à une hauteur au-dessus d'une sortie de trop-plein (201) d'un égout unitaire (2), le procédé comprenant :
- la détection du niveau d'eau dans l'égout unitaire (2) à un intervalle de *t(détection)_{grossière},*
- la transmission des données du capteur de niveau sans contact (101) à un premier intervalle de *t(transmission)_{grossière},* et
- le fait de déterminer si le niveau d'eau dépasse un seuil Hₒ, correspondant à un premier niveau et si le niveau d'eau dépasse le seuil Hₒ, entrant dans un mode de détection et de transmission de trop-plein, le mode de détection et de transmission de trop-plein comprenant le fait d'effectuer :
- la détection du niveau d'eau à un intervalle de *t(détection)ₜᵣₒₚ₋ₚₗₑᵢₙ,* dans lequel *t(détection)ₜᵣₒₚ₋ₚₗₑᵢₙ* est inférieur à *t(détection)_{grossière}* ; et,
- la transmission des données du capteur de niveau sans contact (101), à un intervalle de transmission de *t(transmission)ₜᵣₒₚ₋ₚₗₑᵢₙ,* dans lequel *t(transmission)ₜᵣₒₚ₋ₚₗₑᵢₙ* est inférieur à *t(transmission)_{grossière},*
- et, lorsque le système est en mode de détection de trop-plein et de transmission,
- le fait de déterminer si le niveau de l'eau est inférieur à un seuil correspondant à un second niveau, inférieur au premier niveau, et si le niveau de l'eau est inférieur au seuil correspondant au second niveau :
- la détection du niveau d'eau à l'intervalle *t(détection)_{grossière},* et
- la transmission des données du capteur de niveau sans contact (101) à l'intervalle *t(transmission)_{grossière}.*

8. Procédé dans un système de détection de trop-plein d'égout unitaire (1) selon la revendication 7, dans lequel le procédé comprend :
- l'activation d'un capteur supplémentaire (106, 107) pour détecter un paramètre environnemental et/ou hydrique distinct du niveau de l'eau dans l'égout unitaire (2).

9. Procédé dans un système de détection de trop-plein d'égout unitaire (1) selon l'une quelconque des revendications 7 ou 8, comprenant :
- si le niveau d'eau est inférieur au seuil correspondant à un second niveau,
- la transmission des données du capteur de niveau sans contact (101) et/ou du capteur supplémentaire (106, 107) détectées au cours de l'intervalle précédent *t(transmission)ₜᵣₒₚ₋ₚₗₑᵢₙ,* puis la transmission des données du capteur à un intervalle *t(transmission)_{grossière}.*

10. Procédé dans un système de détection de trop-plein d'égout unitaire (1) selon l'une quelconque des revendications 7 à 9, dans lequel le capteur de niveau sans contact est un radar cohérent à impulsions (PCR) (101).
